# EUROPÄISCHE PATENTANMELDUNG

(11) **EP 1 284 282 A1**
(43) Veröffentlichungstag der Anmeldung: **19.02.2003**
(21) Anmeldenummer: 02017442.1
(22) Anmeldetag: 03.08.2002
(51) Int. Cl.: C10M 155/02, B01D 19/04, C10M 171/00, C10N 30/18

(54) **Verwendung wasserunlöslicher Polysiloxan-Copolymerisate zur Entschäumung nicht wässriger Öle**

(30) Priorität: 18.08.2001 DE 10140625
(71) Anmelder: Goldschmidt AG, 45127 Essen (DE)
(72) Erfinder: Hänsel, Rene, 46282 Dorsten (DE); Hameyer, Claudia, 45138 Essen (DE); Keup, Michael, Dr., 45130 Essen (DE); Kröller, Thorsten, 46282 Dorsten (DE); Oestreich, Sascha, Dr., 45279 Essen (DE)

(57) **Zusammenfassung**

Gegenstand der Erfindung ist die Verwendung von Polyoxyalkylen-Polysiloxan-Copolymeren als Entschäumer für nichtwässrige Systeme auf Basis von Mineralölen oder Syntheseölen, enthaltend mindestens ein Siliconpolyether-Copolymer der allgemeinen Formel (I) 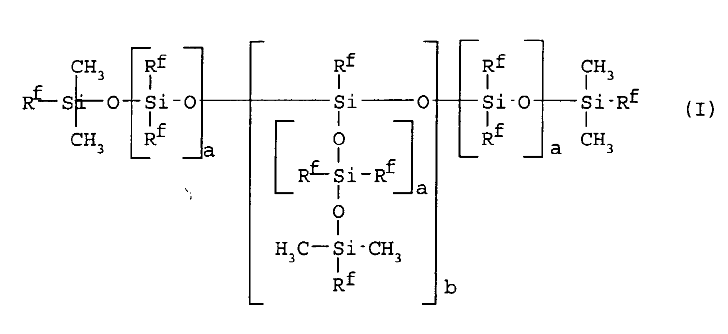 worin R^{f} ein Polyether ist, welcher mindestens eine n-Butylenoxid oder iso-Butylenoxidgruppe enthält.

## Beschreibung

Die Erfindung betrifft die Verwendung wasserunlöslicher Polysiloxan-Copolymerisate zur Entschäumung nichtwässriger Öle.

Nicht wassermischbare, ölbasierende Systeme werden insbesondere in Kraftübertragungsölen als Hydrauliköle, Getriebeöle, Turbinenöle und Motorenöle und in der Metallbearbeitung als beispielsweise Schleiföle eingesetzt. Die auf naphtenbasischen, paraffinbasischen Mineralölen bzw. Hydrocrackölen, oder synthetischen Ölen wie auf Poly-α-olefinen basierenden Systeme sollen eine ausreichende Schmierung gewährleisten und in untergeordneten Maßen auch Wärme abführen.

Moderne Maschinen sind auf höchste Belastungen ausgelegt und müssen auch unter extremen klimatischen Verhältnissen zuverlässig funktionieren.

Diese Leistungssteigerung setzt auch erhöhte Ansprüche an die Qualität der verwendeten Mineralöle voraus. Es ist daher üblich, diesen Mineralölen neben üblichen Additiven wie Korrosionsschutzmitteln, EP/AW-Additiven, Dismulgatoren, Antioxidantien auch Entschäumer zuzusetzen, um die Menge der beim Betrieb von Motoren, Pumpen oder Turbinen durch Verwirbelung in das Öl eingeschleppte Luft zu vermindern und/oder ihre Abgabe aus dem System zu beschleunigen.

Größere Mengen an dispergierter Luft verändern die Eigenschaften des Mineralöls. Die Kompressibilität in hydraulischen Systemen wird spürbar größer; Kavitationseffekte erhöhen den Geräuschpegel der arbeitenden Aggregate, sie verursachen Leistungsabfälle, erhöhen spürbar Abnutzungserscheinungen (Erosionsverschleiß) und verringern damit in gleichem Maße die Betriebssicherheit und die Laufzeit der Maschinen.

Die Entwicklung von Schaum, welcher sich an der Oberfläche des Mineralöls beim Entweichen von Luft bildet, muss unterdrückt werden, da Schaum die rheologischen und chemischen Eigenschaften (Oxidation) der Systeme verändert, die Schmierungs- und Kraftübertragungsprozesse beeinträchtigt und die Gebrauchszeiten von Öl und Maschinen beeinträchtigt.

Da moderne Maschinen in ihren Abmessungen immer weiter reduziert werden und somit auch die benötigten Ölvolumina sowie die benötigten Ölvorratsbehälter immer kleiner dimensioniert sind, haben sich auch die zur Entschäumung zur Verfügung stehenden Volumina sowie die zur Entlüftung zur Verfügung stehenden Zeiten stark reduziert.

Die zur Zeit herkömmlich eingesetzten Entschäumer sind überwiegend Polyalkylsiloxane und Polyacrylate.

Polyacrylate sind weitgehend unproblematisch hinsichtlich ihres Luftabgabevermögens, sind aber als Entschäumer wenig effektiv, so dass eine größere Dosierung notwendig ist. Des Weiteren sind unerwünschte, die Wirksamkeit vermindernde, Wechselwirkungen mit anderen Legierungsbestandteilen des Öls bekannt.

Polyalkylsiloxane, vorzugsweise Polymethylsiloxane sind wirkungsvolle Entschäumer, bei ihrem Einsatz verschlechtert sich jedoch das Luftabgabevermögen (LAV) von unlegierten und legierten Ölen in Abhängigkeit vom Legierungsgrad zum Teil in erheblichem Maße.

Zur Bestimmung des LAV gibt es verschiedene Methoden wie DIN 51381, ASTM D 3427-93, ISO/DIS 9120, ANFOR NFT 60-149. Als LAV wird mit diesen Methoden die Zeit gemessen, bei der das Volumen an in Öl dispergierter Luft auf ein bestimmtes Volumen (0,2 %) reduziert wird, d.h. die Zeit, die durch den Arbeitsvorgang der in Öl eingeschlossenen Luftblasen benötigt wird, um an die Oberfläche zu steigen und zu entweichen.

Ein vermindertes Luftabgabevermögen in Kraftübertragungsölen oder Schmierölen beeinträchtigt jedoch die technische Betriebssicherheit insbesondere der Systeme, die mit hohen Ölumwälzcylen arbeiten und bei denen daher für die Öle in den gering dimensionierten Vorratsbehältern nur wenig Zeit zur Entlüftung (Luftabscheidung) vorgesehen ist.

Es wird daher von einigen Anlagenherstellern aus diesem Grunde vom Einsatz von Polysiloxanen abgeraten.

Effektiv als Entschäumer sind auch herkömmliche Siliconpolyether-Copolymere. Diese enthalten einen oder mehrere Polyether, welche durch Anlagerung von Monomeren wie Propylenoxid und/oder Ethylenoxid, an Startalkohole, wie Allyalkohol, entstehen.

Siliconpolyether-Copolymere wirken, da sie nur teilweise, durch gezielte Modifizierung, in dem zu entschäumenden Medium löslich sind und durch ihre Oberflächenaktivität in die Grenzfläche eintreten.

Die theoretischen Grundlagen zum Bildungsmechanismus dispergierter Luft in Öl und Oberflächenschaum aus gelöster und mechanisch eingearbeiteter Luft und die möglichen Auswirkungen im technischen Betrieb sind seit gut 50 Jahren bekannt (Tourret; White: Aeration and Foaming in Lubricating Oil Systems; Aircraft Engng. 24 (1952), 122-130, 137).

Daraus resultiert die Erkenntnis, dass für die Inhibierung des Oberflächenschaums und der dispergierten Luft gegenläufige Anforderungen bestehen. Oberflächenaktive Stoffe (Si-Öle), welche die Entstehung von Schaum inhibieren, wirken sich negativ auf das Luftabscheidevermögen (LAV) aus.

Bei Mineralölen ist daher die Inhibierung des Oberflächenschaums unter gleichzeitiger Beibehaltung eines günstigen LAV nur durch Auffinden eines optimalen Kompromisses in Form eines Gleichgewichtes möglich.

Die Lösungsvorschläge des Standes der Technik sind der Auffindung dieses optimalen Gleichgewichts noch nicht gerecht geworden.

Um ein hydrophiles/hydrophobes Gleichgewicht in wässrigen Systemen besonders variabel einstellen zu können, haben sich in der Vergangenheit Polyoxyalkylen-Polysiloxan-Blockmischcopolymerisate als geeignet herausgestellt, wie dies unter anderem in US-A-3 763 021 beschrieben ist.

Man macht sich bei Verwendung der Polyoxyalkylen-Polysiloxan-Blockmischcopolymerisate zunutze, dass die Polysiloxanblöcke gezielt mit Polyoxyalkyleneinheiten modifiziert werden können, die durch ihre Zusammensetzung aus hydrophilen und hydrophoben Polyoxyalkyleneinheiten im Zusammenspiel mit dem Polysiloxanblock an das gewünschte Gleichgewicht angepasst werden können.

Dem Stand der Technik, als ein Beispiel sei hier DE-C-1 012 602 genannt, entsprechen Polyoxyalkylen-Polysiloxan-Blockmischcopolymerisate, in denen der Polyoxyalkylenblock als (CₙH₂ₙO)ₓ definiert ist. Der Index n ist dabei eine ganze Zahl von 2 bis 4, wobei wesentlich ist, dass diese Polyoxyalkylenblöcke als gemeinsames Strukturelement stets -CH₂-CHR-O-Gruppen enthalten, wobei R einem Wasserstoffatom, einer Methylgruppe oder einer Ethylgruppe entsprechen kann. Solche Polyoxyalkylenblöcke werden durch ionische Polymerisation von Oxiranderivaten, wie Ethylenoxid, Propylenoxid und Epoxiden längerkettiger Olefine hergestellt.

Typischerweise werden aber in den dem Stand der Technik entsprechenden Polyoxyalkylen-Polysiloxan-Blockmischcopolymerisaten Polyoxyethylene und Polyoxypropylene eingesetzt.

Durch Variation der Oxyalkylenbausteine, insbesondere durch Veränderungen ihres Mengenverhältnisses zueinander und ihrer Abfolge im Polymer (statistisch und/oder blockweise), sind eine große Zahl an Polyoxyalkylen-Polysiloxan-Blockmischcopolymerisaten erhältlich.

Aufgrund der Beschränkung auf diese oben beschriebenen Grundbausteine ist es aber in vielen Fällen bis heute selbst für wässrige Systeme, in denen das LAV keine wesentliche Rolle spielt, nicht gelungen, die für bestimmte Entschäumer notwendige optimale Inkompatibilitäts-/Kompatibilitätsbalance zu finden.

In der DD-A-213 945 werden Schauminhibitoren für Schmieröle auf Mineralölbasis vorgeschlagen, welche die Oberflächenschaumbildung verhindern und gleichzeitig das Luftabgabevermögen der Öle möglichst wenig verschlechtern sollen. Die vorgeschlagenen Verbindungen enthalten ein Polysiloxan-Grundgerüst mit seitenständigen Ethylenoxid- und Propylenoxideinheiten und sind endständig mit Butylgruppen abgeschlossen:

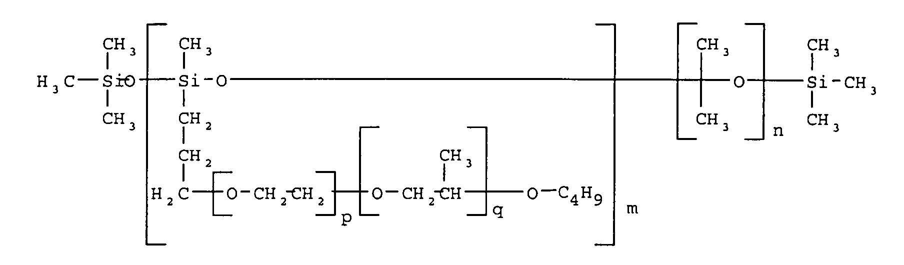

Die mittleren Verhältnisse von m : n liegen zwischen 1 : 1 bis 1 : 8; das Verhältnis von p : q beträgt 1 : 2 bis 2 : 1, wobei die mittlere Molmasse der Polyetherkette 1000 bis 3000 g/mol und die des Siloxanblocks 2000 bis 6000 g/mol beträgt.

Vergleichbare Verbindungen für diesen Zweck werden in der JP-A-11209778 vorgestellt.

Diese Verbindungen weichen ebenfalls nicht von den oben beschriebenen Ethylenoxid- und Propylenoxid-Grundeinheiten ab und sind weiter verbesserungsbedürftig in Richtung auf den angestrebten optimalen Kompromiss.

Eine Aufgabe der vorliegenden Erfindung war es, als Schauminhibitoren für nichtwässrige Synthese- und/oder Mineralölsysteme besonders geeignete Polyoxyalkylen-Polysiloxan-Blockmischcopolymerisate zur Verfügung zu stellen, welche die Oberflächenschaumbildung verhindern oder vermindern und gleichzeitig das Abscheiden der in synthetischen und/oder mineralischen Ölen dispergierten Luft in praxisgerechten Zeiten ermöglichen.

Diese Aufgabe wird überraschenderweise durch die Verwendung wasserunlöslicher Polyoxyalkylen-Polysiloxan-Blockmischcopolymerisate, die eine gezielte Auswahl von Polyethern, wie Tetrahydrofuran, iso-Butylenoxid oder vorzugsweise n-Butylenoxid enthalten, modifiziert sind.

Gegenstand der Erfindung ist daher die Verwendung von Polyoxyalkylen-Polysiloxan-Copolymeren als Entschäumer für nichtwässrige Systeme auf Basis von Mineralölen oder Syntheseölen, enthaltend mindestens ein Siliconpolyether-Copolymer der allgemeinen Formel (I) 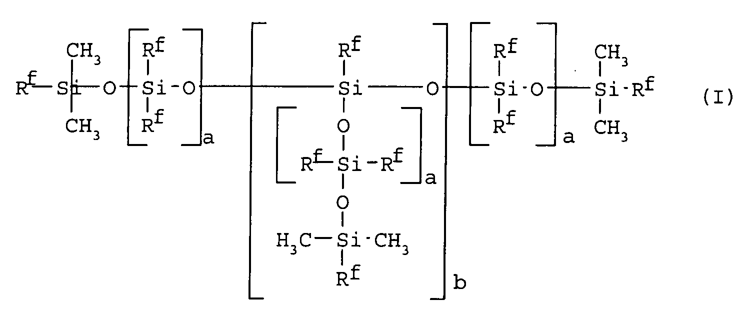 wobei
der Rest
- R^{f}: der Rest R₁ sein kann, wobei
- R₁: ein Alkylrest mit 1 bis 16 C-Atomen, oder ein Arylrest ist;
oder
- R^{f}: der Rest R₂ oder R₃ ist, mit der Maßgabe, dass mindestens ein Rest R^{f} der Rest R₂ ist, wobei
R₂ ein Polyetherrest der Formel II

(F)_{q}(O(CₓH₂ₓO)ᵣz)_{g}

ist, mit der Bedeutung
g = >1
q = 0 oder 1
x = 2 bis 4
r = >1
wobei mindestens eine (C₄H₈O)-Gruppe vorhanden sein muss,
z ein H-Atom oder ein einwertiger organischer Rest ist,
F ein (g + 1)-bindiger Kohlenwasserstoffrest, der auch verzweigt sein kann,
und
R₃ ein Polyetherrest der Formel III

(Y)_{c}(O(C₂H_{4-d}R'_{d}0)ₘ(CₓH₂ₓO)ₚ)_{w})Z

ist, mit der Bedeutung
c = 0 oder 1
d = 1 bis 3
m = >1
p = >1, wobei die Summe m + p = 3 bis 100
x = 2 bis 4
w = 1 bis 4

R' ein Wasserstoffrest, ein einwertiger Kohlenwasserstoffrest mit 1 bis 18 C-Atomen, der auch aromatisch und gegebenenfalls auch ein substituierter Aromat sein kann,
Z ein Wasserstoffrest oder ein einwertiger organischer Rest,
Y ein w-bindiger Kohlenwasserstoffrest, der auch verzweigt sein kann, und wobei in Formel I
- b: eine Zahl von 0 bis 8 ist
- a: eine Zahl von 1 bis 100 ist, wenn b eine Zahl von 6 bis 8 ist,
- a: eine Zahl von 1 bis 200 ist, wenn b eine Zahl von 3 bis 6 ist,
- a: eine Zahl von 1 bis 300 ist, wenn b eine Zahl von 0 bis 3 ist.

Die Werte von a und b sind als durchschnittliche Werte zu verstehen, da die erfindungsgemäß mitverwendeten Siliconpolyether-Copolymere in Form von Regelfall-äquilibrierten Gemischen vorliegen. Besonders bevorzugt sind solche Siliconpolyether-Copolymere, bei denen alle Reste R₁ Methylreste sind.

Das Siloxangemisch kann geradkettig (b = 0) oder verzweigt sein (b >0 bis 8). Der Wert von a kann erfahrungsgemäß nur in der angegebenen Weise mit Werten von b kombiniert werden, da ansonsten die erhöhte Viskosität eine Handhabung unmöglich macht.

Die erfindungsgemäß mitverwendeten Siliconpolyether-Copolymere zeichnen sich durch eine optimale Kompatibilität, bei gleichzeitiger eingeschränkter Löslichkeit aus. Dadurch wird die Entschäumung von insbesondere Metallbearbeitungsflüssigkeiten und Kraftübertragungsölen optimiert. Ferner haben die erfindungsgemäß verwendeten Siliconpolyether-Copolymere, im Gegensatz zu Siliconöl, keinen negativen Einfluss auf das Luftabscheidevermögen von ölbasierenden Systemen, was insbesondere bei Turbinenölen wichtig ist.

Sie können den Ölgemischen zugesetzt werden, wobei diese hier bevorzugt zwischen 10 und 100 ppm eingesetzt werden.

Die erfindungsgemäß mitverwendeten Verbindungen der allgemeinen Formel (I) werden zum Entschäumen von nicht wassermischbaren, auf Öl und Additiven basierenden Systemen eingesetzt, wobei als Öle insbesondere Mineralöle, synthetische oder Hydrocracköle verwendet werden. Diese Öl-basierenden Systeme werden als Motorenöle, Hydrauliköle, Getriebeöle, Turbinenöle und in verschiedenen Metallbearbeitungsprozessen eingesetzt. Aufgabe dieser Systeme kann Schmierung, Wärmeabführung aber auch Kraftübertragung sein.
Um die Wirkung des erfindungsgemäß zu verwendenden Siliconpolyether-Copolymer weiter zu verbessern, kann es von Vorteil sein, sie in einem Lösungsmittel gelöst zuzugeben. Bevorzugt werden hier aromatenhaltige Lösungsmittel wie beispielsweise Solvesso® 150.

Die in der Formel II und Formel III beschriebenen Polyether werden durch Umsetzung eines Startalkohols, der bevorzugt Allylalkohol ist, durch Anlagerung von Monomeren gewonnen. Geeignet sind Ethylenoxid, Propylenoxid und mindestens eine Verbindung aus der Gruppe Tetrahydrofuran, 1,2-Epoxybutan (n-Butylenoxid), oder 2,3-Epoxybutan (iso-Butylenoxid) sowie Stryoloxid und/oder α-Methylstyroloxid.

Dabei kann die Verteilung der Monomere beliebig gewählt sein, so dass beispielsweise Blöcke enthalten sein können. Außerdem ist auch eine Mischung der Monomeren einsetzbar, so dass Polyether erhalten werden, in denen die Einheiten in statistischer Verteilung vorliegen.

Die Reste werden an das Molekül des Polysiloxans durch Addition an SiH-Gruppen des Polysiloxans in Anwesenheit eines Hydrosilylierungskatalysators eingeführt. Nach dem Stand der Technik werden Platin-Katalysatoren verwendet.

Für den Einsatz als Entschäumer werden insbesondere Siliconpolyether-Copolymere der allgemeinen Formel (IV) 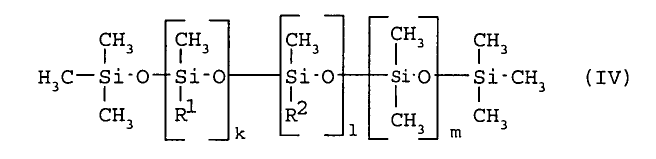 worin
die Siloxankette zwischen 20 und 30 nichtmodifizierte Siloxaneinheiten enthält (m),
- R¹: zwischen 1 und 5 Gruppen (k) und
- R²: zwischen 1 und 5 Gruppen (1), pro Molekül vorhanden sind,
- R¹: ein Allylalkohol-gestarteter Polyether, welcher mit 7 bis 12 Ethylenoxidmolekülen und zwischen 1 und 3 n-Butylenoxidmolekülen (1,2 Epoxybutan) umgesetzt ist,
- R²: ebenfalls ein Allylalkohol-gestarteter Polyether mit 7 bis 12 Ethylenoxidmolekülen ist.

Diese Produkte wurden anwendungstechnisch in dem ASTM 892 Schaumtest überprüft. Außerdem wurde das Luftabscheidevermögen nach der Impingermethode überprüft. Verglichen wurden die erfindungsgemäß hergestellten Produkte mit herkömmlichen Siliconölentschäumern und Acrylatenschäumern. Als Ölformulierung wurde ein Turbinenöl eingesetzt, welches alle Additive bis auf den Entschäumer enthielt. Der Entschäumer wurde mit 20 ppm eingesetzt.

### Ergebnisse im Schaumtest nach ASTM 892 in einem Turbinenöl

| **Entschäumer** | **Sequenz 2** | **Sequenz 3** |
|---|---|---|
| Turbinenöl ohne Entschäumer | 500 ml Schaum | 90 ml Schaum |
| | 312 Sekunden | 23 Sekunden |
| | Zerfallszeit | Zerfallszeit |
| Turbinenöl mit 20 ppm handelsüblichem Silikonölentschäumer | 5 ml Schaum | 0 ml Schaum |
| | 1 Sekunde | 0 Sekunden |
| | Zerfallszeit | Zerfallszeit |
| Turbinenöl mit 20 ppm Acrylatentschäumer | 50 ml Schaum | 30 ml Schaum |
| | 5 Sekunden | 0 Sekunden |
| | Zerfallszeit | Zerfallszeit |
| Turbinenöl mit 20 ppm erfindungsgemäßem Silicon-polyether der Formel IV mit ca. 35 Gew.-% n-Butylenoxid | 0 ml Schaum | 0 ml Schaum |
| | 0 Sekunden | 0 Sekunden |
| | Zerfallszeit | Zerfallszeit |

### Luftabscheidevermögen (Impinger Methode)

| **Entschäumer** | **Zeit (Minuten)** | **Gehalt an dispergierter Luft in %** |
|---|---|---|
| Turbinenöl ohne Entschäumer | 1 | 0,53 |
| | 2 | 0,26 |
| | 3 | 0,16 |
| Turbinenöl mit 20 ppm handelsüblichem Silikonölentschäumer | 1 | 0,81 |
| | 2 | 0,57 |
| | 3 | 0,46 |
| | 4 | 0,32 |
| | 5 | 0,22 |
| | 6 | 0,17 |
| | | |
| Turbineöl mit 20 ppm Acrylatentschäumer | 1 | 0,58 |
| | 2 | 0,30 |
| | 3 | 0,21 |
| | 4 | 0,16 |
| Turbinenöl mit 20 ppm erfindungsgemäßem Silicon-polyether mit ca. 35 Gew.-% n-Butylenoxid | 1 | 0,56 |
| | 2 | 0,32 |
| | 3 | 0,21 |
| | 4 | 0,16 |
| | | |

Die Versuche zeigen, dass das erfindungsgemäß eingesetzte Siliconpolyether-Copolymer die guten Eigenschaften des Siliconöls, gute Entschäumung bei niedriger Dosierung, und die guten Eigenschaften der Polyacrylate, keinen oder nur geringen Einfluss auf das Luftabscheidevermögen, besitzt.

Das erfindungsgemäß eingesetzte Siliconpolyether-Copolymer besitzt die gleiche Entschäumereffizienz wie Silikonöl und hat im Gegensatz zum Silikonöl keinen oder nur geringen negativen Einfluss auf das Luftabscheidevermögen. Im Gegensatz zum Silikonöl ist es wesentlich verträglicher in den ölbasierenden Systemen.

## Patentansprüche

1. Verwendung von Polyoxyalkylen-Polysiloxan-Copolymeren als Entschäumer für nichtwässrige Systeme auf Basis von Mineralölen oder Syntheseölen, enthaltend mindestens ein Siliconpolyether-Copolymer der allgemeinen Formel (I) 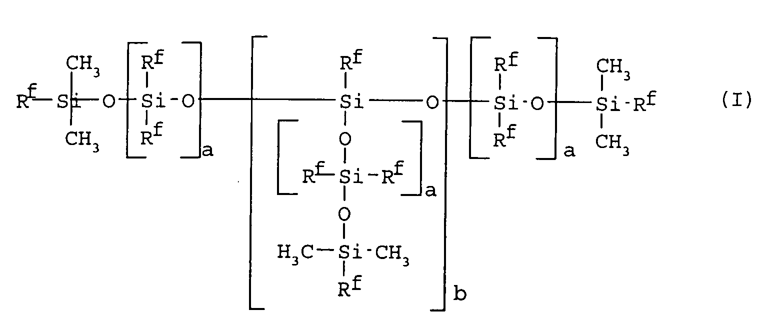 wobei
der Rest
R^{f} der Rest R₁ sein kann, wobei
R₁ ein Alkylrest mit 1 bis 16 C-Atomen, oder ein Arylrest ist
oder
R^{f} der Rest R₂ oder R₃ sein kann, mit der Maßgabe, dass mindestens ein Rest R^{f} der Rest R₂ ist, wobei
R₂ ein Polyetherrest der Formel II
(F)_{q}(O(CₓH₂ₓO)ᵣz)_{g}
ist, mit der Bedeutung
g = >1
q = 0 oder 1
x = 2 bis 4
r = >1
wobei mindestens eine (C₄H₈-O)-Gruppe vorhanden sein muss
z ein H-Atom oder ein einwertiger organischer Rest ist,
F ein (g + 1)-bindiger Kohlenwasserstoffrest, der auch verzweigt sein kann,
R³ ein Polyetherrest der Formel III
(Y)_{c}(O(C₂H_{4-d}R'_{d}0)ₘ(CₓH₂ₓO)ₚ)_{w})Z
ist, mit der Bedeutung
c = 0 oder 1
d = 1 bis 3
m = >1
p = >1 wobei die Summe
m + p = 3 bis 100
x = 2 bis 4
w = 1 bis 4
R' ein Wasserstoffrest, ein einwertiger Kohlenwasserstoffrest mit 1 bis 18 C-Atomen, der auch aromatisch und gegebenenfalls auch ein substituierter Aromat sein kann,
Z ein Wasserstoffrest oder ein einwertiger organischer Rest,
Y ein w-bindiger Kohlenwasserstoffrest, der auch verzweigt sein kann,
und wobei in Formel I
b eine Zahl von 0 bis 8 ist
a eine Zahl von 1 bis 100 ist, wenn b eine Zahl von 6 bis 8 ist,
a eine Zahl von 1 bis 200 ist, wenn b eine Zahl von 3 bis 6 ist,
a eine Zahl von 1 bis 300 ist, wenn b eine Zahl von 0 bis 3 ist.

2. Verwendung von Polyoxyalkylen-Polysiloxan-Copolymeren als Entschäumer für nichtwässrige Systeme auf Basis von Mineralölen oder Syntheseölen gemäß Anspruch 1, enthaltend mindestens ein Siliconpolyether-Copolymer der allgemeinen Formel (IV) 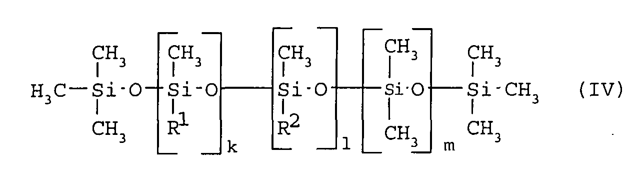 worin
die Siloxankette zwischen 20 und 30 nichtmodifizierte Siloxaneinheiten enthält (m),
R¹ zwischen 1 und 5 Gruppen (k) und
R² zwischen 1 und 5 Gruppen (1) pro Molekül vorhanden sind,
R¹ ein Allylalkohol-gestarteter Polyether, welcher mit 7 bis 12 Ethylenoxidmolekülen und zwischen 1 und 3 n-Butylenoxidmolekülen (1,2-Epoxybutan) umgesetzt ist,
R² ebenfalls ein Allylalkohol-gestarteter Polyether mit 7 bis 12 Ethylenoxidmolekülen ist.

3. Verwendung von Polyoxyalkylen-Polysiloxan-Copolymeren als Entschäumer für nichtwässrige Systeme auf Basis von Mineralölen oder Syntheseölen gemäß Anspruch 1,
wobei
mindestens 80 % der Gruppen
R₂ und R₃ Methylgruppen sind,
R₁ ein Alkylrest mit 1 bis 16 C-Atomen
R₂ (F)_{q}(O(CₓH₂ₓO)ᵣz)_{g} ist, mit der Bedeutung
g = 1 bis 10.

4. Verwendung von Polyoxyalkylen-Polysiloxan-Copolymeren als Entschäumer für nichtwässrige Systeme auf Basis von Mineralölen oder Syntheseölen gemäß Ansprüchen 1 bis 3, wobei die einzelnen Polyoxyalkyleneinheiten blockweise angeordnet sind.

5. Verwendung von Polyoxyalkylen-Polysiloxan-Copolymeren als Entschäumer für nichtwässrige Systeme auf Basis von Mineralölen oder Syntheseölen gemäß Ansprüchen 1 bis 4 wobei die (C₂H₄₋ₐR₁₀ₐO)_{c}-Gruppen blockweise unmittelbar am Kettenende angeordnet sind.

6. Verwendung nach den Ansprüchen 1 bis 5 **dadurch gekennzeichnet, dass** die Entschäumer in einem Lösungsmittel gelöst vorliegen.

7. Verwendung wasserunlöslicher Polyoxyalkylen-Polysiloxan-Blockmischcopolymerisate gemäß den Ansprüchen 1 bis 6 zur Entschäumung von Hydraulikölen, Getriebeölen, Turbinenölen, Motorenölen und Kühlschmierstoffen.
